# EUROPEAN PATENT SPECIFICATION

(11) **EP 3 714 682 B1**
(45) Date of publication and mention of the grant of the patent: **23.11.2022**
(21) Application number: 19166405.1
(22) Date of filing: 29.03.2019
(51) Int. Cl.: A01G 9/12

(54) **A GRIPPING APPARATUS FOR RELOCATING HIGH-WIRE HOOKS SUPPORTING HIGH-WIRE CROPS IN HORTICULTURE**
GREIFVORRICHTUNG ZUM UMSETZEN VON HOCHDRAHTHAKEN, DIE HOCHDRAHTKULTUREN IM GARTENBAU TRAGEN
APPAREIL DE PRÉHENSION POUR TRANSFÉRER DES CROCHETS HAUTS SOUTENANT DES CULTURES EN HAUTEUR EN HORTICULTURE

(43) Date of publication of application: 30.09.2020
(73) Proprietor: Veditec BVBA, 2580 Putte (BE); Ferho BVBA, 2840 Reet (BE)
(72) Inventor: Verbruggen, Dimitri, 2580 Putte (BE); Hadermann, Dries, 2840 Reet (BE); Courtois, Jan, 2860 Sint Katelijne Waver (BE)
(74) Representative: IP HILLS NV

(56) References cited:
- BE-A0- 1 017 173
- NL-C2- 1 028 392

## Description

### Field of the Invention

The present invention generally relates to tools for use in horticulture, more specifically a device for relocating high-wire hooks according to claim 1 and a method for relocating high-wire hooks according to claim 13.

### Background of the Invention

Horticulture is the cultivation, processing, and sale of vegetables, fruits, nuts, plants and flowers. In horticulture horticulturists apply their knowledge, skills, and technologies to grow fruits, plants, and so on, for use in food, cosmetics, beverages, decoration, design, and gardening.

Different types of tools and technology are applied in horticulture to work efficiently and economically. An example of such a tool is a high-wire hook for supporting high-wire crops. A high-wire crop is a crop that is supported by a rope such that it grows in an efficient and optimal manner. An example of high-wire crops are tomatoes, cucumbers, paprika, and aubergine.

The working height offered by the supporting rope depends on a variety of parameters like, for example, the type of crop, the cultivar, plant variety, the soil, the growth rate, and so on. In the art of horticulture, a horticulturist is familiar with the way high-wire crops need to be supported and arranges the ropes in combination with the high-wire crops and a hanging wire. The hanging wire is located above the high-wire crops at a sufficiently high position thereby allowing the high-wire crops to grow in a generally upward and oblique direction.

For practical reasons, the height whereupon the hanging wire is arranged is limited. These practical reasons are, for example, the height of a greenhouse and/or the infrastructure employed for supporting the hanging wire.

When the high-wire crops are supported by the rope between the crops and the hanging wire, the optimum working height whereupon the crops are hanged will continuously change. This is because the crops grow and therefore increase in length. The high-wire crops need to be constantly monitored and the length of the rope adjusted to changing conditions thereby adapting the hanging height of the crops with respect to the hanging wire and the soil.

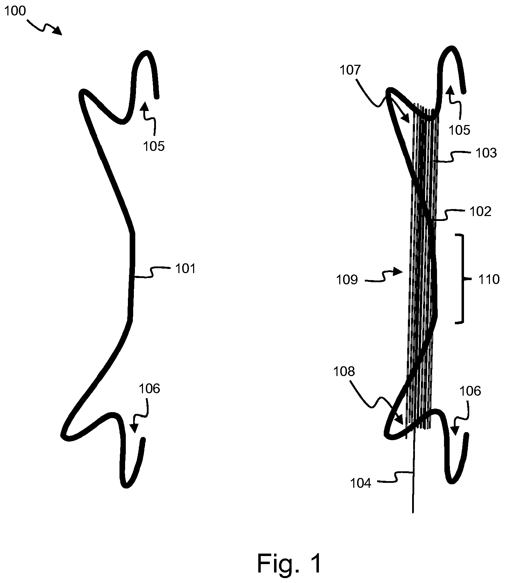

In the art of cultivating high-wire crops, high-wire hooks are used to adjust a height when hanging or supporting the crops. In Fig. 1 an illustration 100 is given of such a high-wire hook. On the left side of Fig. 1, a blank high-wire hook 101 is illustrated, while on the right side, a same high-wire hook 102 is illustrated comprising a wrapped rope 103, 109 therearound. The high-wire hook 101, 102 is a folded or bended steel-wire or other material suitable for being mechanically loaded. Since, commonly, a significant number of high-wire hooks are employed in a greenhouse or other premises, the horticulturist purchases the high-wire hooks in bulk, whether prewinded with the wrapped rope 103, 109.

The high-wire hook 101, 102 may comprise a variety of colours, steel thickness, and sizes, but is consistently shaped in such a way that it comprises hooks and loops. The shape will now be discussed in detail.

The high-wire hook 101, 102 comprises a pair of opposite loops 107, 108 for wrapping there around the rope 103, 109. A suspension hook is further located in the proximity of a respective loop, this is, suspension hook 105 and loop 107 are located close to each other and at an opposite side the suspension hook 106 and loop 108 are likewise located close to each other.

Through one of the suspension hooks 105, 106, the high-wire hook 102, is hanged on the hanging wire, while from the opposite side the rope extends to support the high-wire crops. For example, when the high-wire hook 102 is hanged through suspension hook 105 on the hanging wire, the rope 104 extends to the high-wire crop that is supported.

To adjust the rope 104 to the changing conditions, this is adapting the hanging height of the crops with respect to the hanging wire and the soil, the high-wire hook 102 is rotated such that the suspension hooks 105, 106 switch positions thereby unwinding or winding the rope, depending on the direction of rotation.

Generally, the rope is unwinding thereby extending it. Simultaneously, the high-wire hook is relocated by translating it along the hanging wire.

In high-wire crop horticulture, the combined rotation and translation of the high-wire hook is manually performed by workers. The workers inspect the crops along the hanging wire and relocate the high-wire hook when needed. To relocate the high-wire hook, the manual worker grabs the high-wire hook 102 near the middle 110.

The relocation of high-wire hooks is a labour-intensive aspect in the cultivation process of high-wire crops. It is further monotonous and needs to be performed in an unpleasant atmospheric environment, like a high humidity and temperature. This is a problem, since it is hard finding workers willing to perform this type of labour.

Further, although being monotonous, the labour workers need to be attentive not making any errors. When, while relocating a high-wire hook, the hook is accidently dropped to the ground, the rope wrapped there around may intertwined with the crops. This does not only result in a waste of time aversely influencing the cultivation process, but also damage the crops when trying to separate the rope from the crops.

It is therefore an object of the present invention to alleviate the above drawbacks and to provide an improved solution for supporting high-wire crops in an efficient manner, and efficiently adjust the hanging height to changing conditions.

NL1028392C2 discloses a device to change the position of a plant that grows upwards along a wire, has a unit to change the position of a winding hook, around which the wire is partly wound, hung on a tightly stretched horizontal cable. The unit has manipulation devices to turn and move the winding hook in a horizontal direction, and detection devices to detect the cable and the winding hook hung on the cable. The manipulation devices have hooks, which can hook behind ends of the winding hook and a motor connected to the frame, which can turn the frame around the turning shaft. This can hold and turn the winding hook so that the wire unwinds from the winding hook. The detection devices have a mechanical sensor, which has two sensor arms, which are set up in a V-shape with respect to each other and which are connected to microswitches by an end.

### Summary of the Invention

This object is achieved, in a first aspect, by the gripping apparatus according to claim 1.

The gripping apparatus is configured to relocate a high-wire hook configured to support a high-wire crop in horticulture, such as, but not limited to, tomatoes, cucumbers, paprika, and aubergine. The high-wire hook comprises a pair of opposite loops, a rope wrapped there around, and a pair of suspension hooks, each suspension hook located in the proximity of a respective hook.

When the high-wire hook is in use, it is hanged on a hanging wire located above the high-wire crops that it is supporting. The hanging is performed through one of the suspension hooks, and the supporting of the crops through the rope departing from the loop near the other suspension hook, this is the hook that is not hanging on the hanging wire. The rope is attached to an ending of the high-wire crop, whereby the ending is to be regarded as a part of the high-wire crop that is suitable for attaching a rope to support or uphold the crop such that the cultivation process thereof is facilitated. Consequently, the rope is extended between the hanging wire through the high-wire hook and the high-wire crop.

To relocate the high-wire hook, the gripping apparatus comprises a gripping mechanism comprising a protuberance. The protuberance or protrusion is configured to insert in one of the loops of the high-wire hook. Since the rope is wrapped around the loops, each loop will form an opening bounded by the curves of the high-wire hook on the one hand, and by the rope on the other hand. In other words, at both sides of the high-wire hook, openings are present. These openings are present when the high-wire hook is used to support the crops through the rope.

The gripping apparatus further comprises a robot arm coupled to the gripping mechanism comprising the protuberance. In other words, at one end of the robot arm the gripping mechanism is coupled thereto. Further, the other end of the robot arm is operatively coupled to a processing unit. Operatively means that the processing unit controls the movement of the robot arm such that it may be actuated in a desired position. Since the robot arm is likewise coupled to the gripping mechanism, the processing unit is also able to actuate the gripping mechanism.

To relocate the high-wire hook through the gripping apparatus, the processing unit actuates the robot arm such that the protuberance is inserted in one of the loops of the high-wire hook. This way, the gripping apparatus grips the high-wire hook such that it may be relocated to a preferred or desired other position.

It should be further understood that the robot arm comprise a mechanical arm configured to perform rotational motions and/or translational movements. The robot arm may thus comprise a bar between the gripping mechanism and the processing unit, and may further comprise more complex configurations, such as one or more hinge or pivoting points, a chain of links moveable by joints actuated by motors, and/or telescopically extendable bars.

The protuberance may further shapely correspond to the shape of the supported loop. Differently formulated, the shape of the protuberance may be formed such that both the loop and the protuberance fit formally.

Different advantages are identified. Firstly, there is no need for a horticulturist to adapt, to replace, and/or to substitute an existing installation or infrastructure. The infrastructure, this is the system comprising the hanging wire and high-wire hooks, remains the same. The horticulturist therefore does not have to make an expensive investment regarding the existing mechanism of supporting the crops, but may continue cultivating the high-wire crops in a manner to which he or she is familiar with.

Secondly, by inserting the protuberance into one of the loops of the high-wire hook, it is prevented that the rope wrapped there around gets damaged when relocating the hook since it is not touched. Differently formulated, instead of imitating the manner manual workers relocate a high-wire hook, this is grabbing the hook at middle thereof, the hook is grabbed at an ending. Because of this, the rope wrapped around the high-wire hook is not touched by the gripping apparatus. A further advantage thereof is that the high-wire hook may be relocated without retaining an ending of the rope at a fixed position with respect to the high-wire hook. Otherwise, if the hook would be grabbed at the middle, thus at the wrapped robe, the grabbing itself locks the rope.

The gripping mechanism further comprises a first support member from which the protuberance extends. The protuberance may extend in an upward direction away from the first support member, i.e. in the extension from the robot arm. Another preferred possibility is that the protuberance extends in a perpendicular direction regarding the direction of the robot arm. The gripping mechanism further comprises a second support member coupled to the first support member and further coupled to the robot arm. For lifting the high-wire hook, the gripping mechanism is actuated by the robot arm to insert the protuberance into the supported hook. Next, when the hook is lifted by the protuberance it is supported by the second support member. Differently formulated, when the protuberance is inserted in the supported loop of the high-wire hook, the high-wire hook may be lifted. Next, when the high-wire hook is lifted it is further supported by the second support member. The second support member supports both the opposite loops. This way the high-wire hook is securely supported while it is avoided that the rope is touched by the gripping mechanism.

The shape of the second support member is adapted to the high-wire hook that it supports. Thereto, the length of the second support corresponds at least to the distance between the opposite loops of the high-wire hook. It should thus be further understood that this distance may vary depending on the size of the high-wire hooks employed by the horticulturist. In other words, per type of high-wire hook, a type of a second support member may be used and coupled to the robot arm. Preferably, the second support member has a slim design, that is the second support member is an elongated support member. At an ending of the elongated support member, the first support member is coupled from which the protuberance extends. The protuberance then supports the supported hook, and the loops are supported by the second support member. Subsequently, the high-wire may be lifted and relocated by the gripping apparatus. The relocation is, for example, performed by a translation and/or rotation by actuating the robot arm.

When lifted an undesired rotation of the high-wire hook may arise by the rope which is coupled to a crop. The rope may pull the high-wire hook thereby giving rise to this undesired rotation. Through the supporting of the high-wire hook by the second support member, undesired rotations are avoided. This is an advantage, since this way it is avoided that the rope wrapped around the loops of the high-wire hook would unwrap in an undesired manner thereby damaging the crops and/or negatively influencing the cultivation process thereof by changing the supporting height.

According to an embodiment, the protuberance is slidably coupled to the first support member, and the processing unit is further configured to actuate the protuberance for sliding it in the supported loop.

The protuberance may also be coupled to the first support member in a slidable manner. The sliding or gliding may, for example, be pneumatically and/or telescopically. This way, the protuberance is movable regarding the first support member. This is an advantage, since this way the protuberance may slid into the supported loop without moving the first and/or second support member. In other words, the gripping mechanism can be moved close to the high-wire hook, whereby the protuberance points to the supported hook. Next, the protuberance is slid towards the hook and subsequently inserted into the supported loop.

In a subsequent step the high-wire hook may be lifted whereby the hook pivots with the protuberance as a point of rotation until it is supported by the second support member. In an alternative manner, the second support member is guided to the hook prior to the lifting.

According to an embodiment, the first support member is pivotably coupled to the second support member, and the processing unit is further configured to pivot the first support member for actuating the protuberance in the supported loop.

The first support member wherefrom the protuberance extends may thus pivot towards the high-wire hook for inserting the protuberance into the supported loop. This is an advantage because more flexibility is obtained, especially when combined with the slidably coupled protuberance. The processing unit thus actuates the robot arm such that the gripping mechanism is positioned close to the high-wire hook. Next, the pivotably coupled first support member is pivoted such that the protuberance is pivoted into the supported loop for lifting it.

The protuberance may then further be a serrated surface on the first support member to grip the supported loop for lifting it.

According to an embodiment, the first support member further comprises a stop member configured to halt the protuberance when actuated.

The first support member thus comprises two elements cooperating with each other. The first element comprises the protuberance while the second element is positioned such that it halts or blocks the protuberance when it is actuated by sliding and/or pivoting it. When the protuberance is slidably coupled to the first support member, the stop is positioned opposite to the ending of the protuberance. To lift a hook, the protuberance is then slid into the supported hook until it pushes against the stop member. This way, the hook is locked by the protuberance and the stop member. Next, the hook can be lifted in a secure manner. Alternatively, or additionally, the protuberance is pivoted such that it likewise is stopped or halt by the stop member.

Further, when the protuberance comprises a serrated surface, the stop member combined with the protuberance may be used to grip or clamp the supported loop for lifting and/or relocating it.

According to further example embodiments, the gripping mechanism further comprises a third support member coupled to the second support member configured to support the high-wire hook at a loop opposite to the supported loop when lifted.

Preferably, the gripping mechanism further comprises a third support member to support the high-wire hook at the loop opposite to the supported loop. Since the third support member is coupled to the second support member, it supports the high-wire hook in a direction different regarding the second support member. When the high-wire hook is lifted it is thus supported by the protuberance, by the second support member, and by the third support member. This is an advantage because by supporting it in distinct direction external disturbances may be absorbed when relocating the hook thereby reducing a risk of erroneously unwrapping the rope.

The third support member is, for example, a support member perpendicular to the second support member. Further, the third support member may mainly extend from the second support member at the ending opposite to the first support member. The size and shape of the second support member may further vary from that of the first support member.

Further, the third support member may be a V-groove configured to receive the loop opposite to the supported loop. Via the V-groove, the high-wire hook is slid therein and subsequently supported by the second and third support member.

According to an embodiment, the third support member is pivotably coupled to the second support member, and the processing unit is further configured to actuate the third support member to clamp the loop opposite to the supported loop.

In a preferred embodiment, the third support member is pivotably coupled thereby forming a clamp such that the high-wire hook may be clamped when lifted. The third support member may thus comprise a clamp or a clip pivotably coupled to the second support member through a hinge. The clamp may then pivot with respect to the second support member. This way the loop opposite to the supported loop of the high-wire hook may be clamped by the clamp.

When relocating the high-wire hook, the protuberance lifts the hook, the first and second support members supports the hook, and subsequently the third support member comprising the pivotably coupled clamp clamps the loop opposite to the supported hook. Next, since the high-wire hook is this way securely supported, the high-wire hook may be relocated through rotations and translation in a secure manner.

According to example embodiments, the third support member comprises a serrated surface for supporting the high-wire hook at the loop opposite to the supported loop when lifted.

The serrated surface points to the loop opposite to the supported loop of the high-wire hook when supported. This way, an additional support of the hook is provided through the surface.

According to example embodiments, the gripping mechanism further comprises locking means, whereby the locking means are configured to lock the high-wire hook onto the protuberance when lifted.

The locking means are, for example, configured to lock the supported loop at the protuberance. Alternatively, or additionally, the locking means lock the pivotably coupled clamp. Through the locking means, an additional safety measure is provided for securely relocating the high-wire hook.

According to example embodiments, the gripping apparatus further comprises:
- a detection means configured to detect and spatially locate a loop of a high-wire hook closest to a suspension hook for hanging on the hanging wire; and
wherein the processing unit, operatively connected to the optical detection means, is further configured to:
- actuating the robot arm by inserting the protuberance into the located loop; and
- gripping the high-wire hook; and
- lifting the high-wire hook through the gripping mechanism; and
- rotating the high-wire hook around the line segment bisector of a segment bounded by the suspension hooks by a predefined number of turns until one of the suspension hooks points to the hanging wire; and
- hanging the high-wire hook on the hanging wire by the suspension hook pointing to it.

Additionally, the gripping apparatus may comprise detection means configured to detect to loop the closest to the suspension hook used to hang the high-wire hook on the hanging wire, in other words the loop which will become the supported loop. The detection means may further derive therefrom the location of the the hanging wire whereupon the high-wire hook is hanged. In other words, the location is determined with respect to a reference, for example a reference within the detection means, and/or with respect to the robot arm, and/or with respect to the gripping mechanism.

The detection means are further operatively connected to the processing unit. Hereby the detection means shares the data representative for the detection and spatial location of the supported loop and in case the hanging wire. In other words, the detection means cooperate with the processing unit such that the processing unit actuates the robot arm based on the data captured or retrieved by the detection means.

Firstly, when the loop the closest to the suspension hook for hanging the high-wire hook is located, the robot arm is actuated such that the protuberance is inserted in the located loop. The located loop then becomes the supported loop.

Secondly, the high-wire hook is gripped by the gripping mechanism. This may be performed by the stop member, by the pivotably coupled first support member, and/or by the third support member, in case clamping a loop when pivotably coupled to the second support member

Thirdly, through the gripping mechanism, combined with the robot arm, the high-wire hook is lifted. It should be further understood that, in case the gripping mechanism comprises the first and/or second support member, whether combined with the clamp and locking means, the lifting is performed by the use and additional support of the first and/or second support member, whether combined with the clamp and locking means, as illustrated by example embodiments thereof.

The high-wire hook is lifted such that it no longer hangs on the hanging wire. Further when lifted, it is displaced at a distance from the hanging wire such that further movements may be performed without interfering with the hanging wire.

Fourthly, when the high-wire hook is lifted, the processing unit actuates the robot arm such that the high-wire hook rotates around the line segment bisector of the segment bounded by the suspension hooks. In other words, the high-wire hook is rotated around its centre point such that the suspension hooks, when rotated, define a circle. This way the rope wrapped around the loops may be further unwrapped thereby extending the supporting height or rewrapped thereby reducing the supporting height. The number of turns depends on the desired change of the supporting height, which on its behalf depends on the changing conditions with respect to the cultivation process of the high-wire crops. It should thus be further understood that the number of turns may not be defined beforehand and may continuously be adapted based on preferences and knowledge of the horticulturist. A turn may thus also be a turn of hundred and eighty degrees, which could be understood as a half turn.

Fifthly, after rotating the high-wire hook by the predefined number of turns, a suspension hook points to the hanging wire. This is the hook that point in an upward direction, thus away from the soil and the crops. The processing unit then actuates the supporting arm by hanging the high-wire hook with this new suspension hook on the hanging wire. Since the detection means may spatially locate the hanging wire or indirectly derive its position, the processing unit relies on this data, whether combined with the movement performed when the high-wire hook was lifted and rotated.

When hanged on the hanging wire, the high-wire hook may be released by the gripping mechanism. Subsequently, the gripping apparatus may continue to a next high-wire hook and repeat the steps for adapting the supporting height.

According to embodiments, the detection means are further configured to detect and spatially locate the hanging wire, and the processing unit is further configured to, when the high-wire hook is lifted, actuating the robot arm such that the high-wire hook is translated by a predefined distance along the hanging wire.

The detection means may further detect and spatially locate the hanging wire. Next, additionally to the rotating of the high-wire hook, the processing unit may actuate the robot arm such that the high-wire hook is translated when lifted. Through this combination of rotations and translations, the high-wire hook may be rotated by a predefined number of turns and translated by a predefined distance. Through this way of controlling the relocation of the high-wire hook, the cultivation process of the high-wire crops may be controlled and maintained by the gripping apparatus in a flexible manner.

According to an embodiment, the detection means comprises one of the group of optical detection means, inductive detection means, and/or mechanically detection means.

In other words, the high-wire hook, the loop, and/or the hanging wire may be detected via a variety of detections means, such as optical, inductive and/or mechanically. Furthermore, two or more detection means may be used in a combined manner for detecting the elements.

According to further example embodiments, the gripping apparatus further comprises movement means configured to move the gripping apparatus along the hanging wire.

The movement means allows the gripping apparatus to move along the hanging wire such that a plurality of high-wire hooks may be relocated by the gripping apparatus. This way the plurality of crops is monitored and maintained in an efficient and fast manner. The movement means may, for example, be integrated in the gripping apparatus such that it moves autonomously with, for example, a global positioning system module, or another reference system in the premises. The movement means may also be combined with a rail system constructed or arranged on the soil next to the crops.

According to an embodiment, the gripping apparatus further comprises lifting means configured to lift the robot arm in an upwards direction.

The robot arm may be mounted on a lifting means, such as a lifting pantograph system. This way the reach or range is levered and high-wire hooks hanging at a substantial height with respect to the soil may be relocated as well.

According to a second aspect, the method for relocating a high-wire hook with the gripping mechanism according to the first aspect is disclosed, the method comprising the steps of:
- actuating the robot arm by inserting the protuberance into the supported loop; and
- gripping the high-wire hook; and
- lifting the high-wire hook through the gripping mechanism; and
- rotating the high-wire hook around the line segment bisector of a segment bounded by the suspension hooks by a predefined number of turns until one of the suspension hooks points to the hanging wire; and
- hanging the high-wire hook on the hanging wire by the suspension hook pointing to it.

According to an embodiment, the method further comprises the step of actuating the robot arm such that the high-wire hook is translated by a predefined distance along the hanging wire.

### Brief Description of the Drawings

Some example embodiments will now be described with reference to the accompanying drawings.
Fig. 1 illustrates a high-wire hook for supporting a high-wire crop in horticulture; and
Fig. 2 illustrates a plurality of high-wire hooks hanged on a hanging wire; and
Fig. 3 illustrates high-wire crops; and
Fig. 4 illustrates a gripping mechanism according to an embodiment to the invention; and
Fig. 5 illustrates a gripping mechanism according to another embodiment of the invention; and
Fig. 6 illustrates a gripping apparatus according to an embodiment of the invention.

### Detailed Description of Embodiment(s)

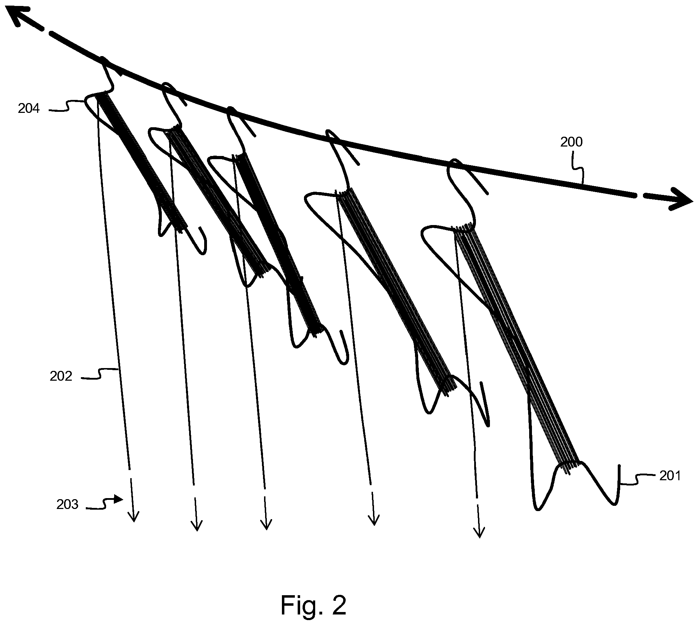

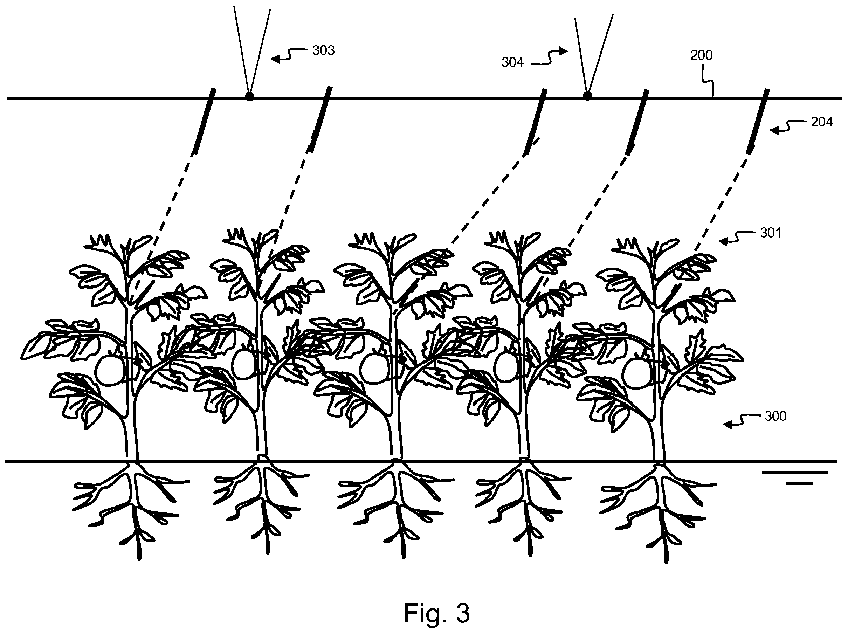

In Fig. 1 a high-wire hook 100 is illustrated. The illustrated high-wire hook 101 on the left side of Fig. 1 doesn't comprises a wrapped rope, while the illustration of the hook 102 on the right side comprises a wrapped rope 103, 109 around the loops 107 and 108. The high-wire hook 101, 102 further comprises hooks 105, 106 for hanging the high-wire hook 101, 102 on a hanging wire. Such a hanging wire is illustrated in Fig. 2 and in Fig. 3. On the hanging wire 200 a plurality of high-wire hooks 201, 204 are hanged. From the high-wire hook 240 a rope 202 extends 203 for supporting a high-wire crop, such as tomatoes 300. On dedicated spots 303, 304 the hanging wire 200 itself may further be hanged on the structure of, for example, a greenhouse.

The high-wire hook 101, 102 is hanged on the hanging wire 200 through one of the hooks, for example hook 105 which is further denominated as the hanging hook 105. The loop 107 near the hanging hook 105 is denominated as the supported loop 107. The loop 108 opposite to the supported loop is then denominated as the opposite loop 108. At the opposite side of the hanging hook 105 the rope 104 extends to the crops. Since the crops 300 grow, the high-wire hooks 101, 102 need to be turned or rotated such that the crops 300 remain supported. When manually performed, a worker grips the high-wire hook 101 at the zone 110 and turns the hook 102, followed by a translation over the hanging wire 200.

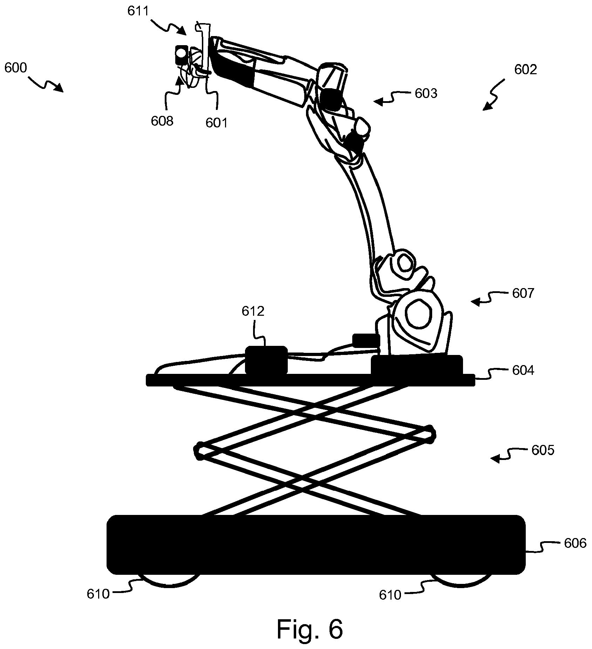

To rotate and translate the high-wire hook 101, 102 in an efficient and automated manner, a gripping apparatus 600 is used as illustrated in Fig. 6. The illustrated gripping apparatus 600 comprises movement means 610, such as for example a pair of wheels configured to move over a rail system. The rail system is then present on the soil between rows of crops in the greenhouse. The gripping apparatus 600 further comprises a platform 606, whereupon a lifting pantograph system 605 is mounted. Thereupon a desk or work table 604 is mounted for supporting a robot arm 602. The robot arm 602 comprises, for example, two pivoting points 607 and 603, and a rotatable ending 611. At the ending 611 of the robot arm 602 a gripping mechanism 601 is mounted, together with detection means 608. The gripping apparatus further comprises a processing unit, for example housed in a box 612.

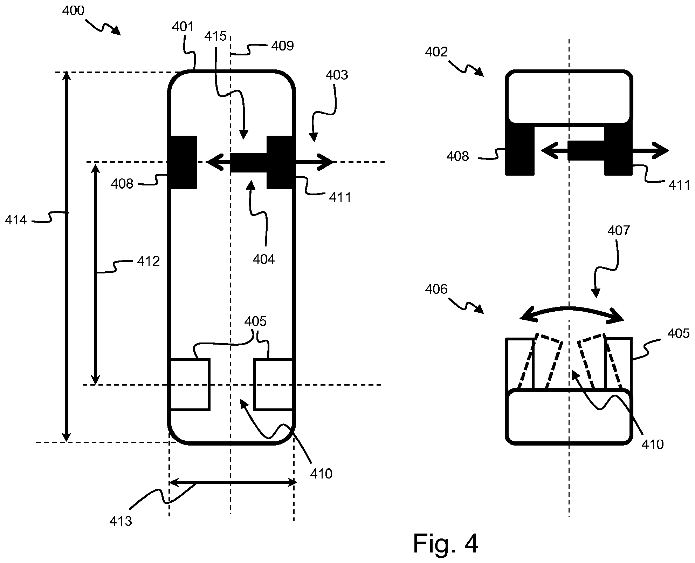

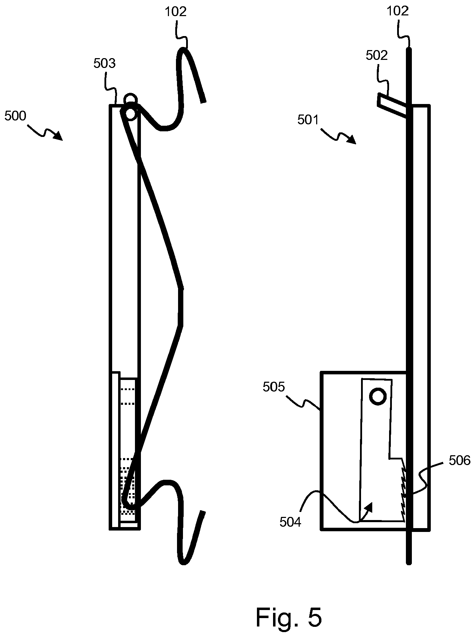

The gripping mechanism 601 is configured to grip or clamp the high-wire hook 101, 102. A first example embodiment of the gripping mechanism 601 is illustrated in Fig. 4. A second example embodiment of the gripping mechanism 601 is illustrated in Fig. 5.

The gripping mechanism of Fig. 4 is illustrated in a front view 400, a top view 402 and a down side view 406. The gripping mechanism comprises a first support member 411 wherefrom a protuberance 404 extends. In a preferred embodiment, the protuberance 404 is slidable which is illustrated by arrow 403. The first support member 411 further comprises a stop member 408 to halt the protuberance 404 when slid against it. The first support member 404, 408 is coupled to a second support member 401, for example by a welding joint or by pivoting points. The second support member 401 comprises a slim design, meaning that one dimension 414 is considerably longer than a dimension 413 perpendicular thereupon. The gripping mechanism further comprises a third support member 405 coupled to the second support member 401 and positioned opposite to the first support member 411, 408. The third support member 405 may pivotably be coupled to the second support member 401 which is illustrated by the arrow 407 at the down side view 406.

To relocate a high-wire hook 102, the robot arm 602 approaches the hook 102 with the gripping device 601, which corresponds to the illustration in Fig. 4. The supported loop 107 is detected by the detection means 608 for inserting therein the protuberance 404. Next, when the protuberance 404 is inserted in the loop 107, the protuberance 404 is slid against the stop member 408. This way, the hook is gripped at one side 415 of the gripping mechanism via the supported loop 107. Next, the gripping mechanism is actuated by the processing unit such that the third support member 405 with the zone 410 pushes against the opposite loop 108. The high-wire hook 102 will then be positioned with its longitudinal direction in line with line 409. The side 109 of the high-wire hook 102 will further point to the second support member 401 and pushing against it, or vice versa. This way the hooks 105 and 106 remain free. Likewise, the wrapped rope 103 also remains free for unwrapping it. Next, the third support member 405 is pivoted 407 to clamp or grip the high-wire hook 102 at loop 108. The distance between the zone 415 of the first support member 411, 408 and zone 410 of the third support member 405 thus corresponds to the distance between the two loops 107 and 108. This is illustrated by distance 412. It should thus be understood that this distance may vary depending on the type of high-wire hook that is used to support different types of crops. The high-wire hook 102 is thus gripped by the gripping mechanism 400, whereby the suspension hooks 105, 106 are pointing away from the surface of the second support member 401.

The gripping of the high-wire hook 102 may further be facilitated by the pivoting third support member 405. In the down side view 406 it is illustrated that the third support member 405 pivots in an inward direction 407 such that the loop 108 is clasped in the zone 410. Such a pivoting may likewise be configured for the first support member 403, 408 whereby the stop member 408 and the member 411 wherefrom the protuberance 404 extends pivot towards each other.

By gripping the high-wire hook 102 through the supported loop 107 and the opposite loop 108, the high-wire hook 102 may be lifted such that the hanging hook 105 is taken of the hanging wire 200. The high-wire hook 102 can now be rotated by the ending 611 of the robot arm 602. This way, the rope 103, 104 may be partly unwrapped for adapting the length of the rope to the condition of the crops 301, 300.

Subsequently or simultaneously with the one or more rotations of the high-wire hook 102, the robot arm 602 may translate the hook 102 along the hanging wire 200. This translation may further be combined with a translation of the gripping apparatus 600 with the movement means 610.

Another example embodiment of the gripping mechanism is illustrated in Fig. 5. The gripping mechanism illustrated from two different viewpoints 500, 501 comprises a protuberance 502 extending from a supporting plate 503. The supporting plate 503 may thus correspond to the second support member 401. To grip the high-wire hook 102, the protuberance 502 is inserted in the supported loop 108 by actuating the robot arm 602. Next, by the protuberance 502 the hook is lifted such that the opposite loop 108 is hinged towards the support member 503 with the protuberance 502 as pivoting point. Next, the high-wire hook 102 is further secured by the third support member 505 with a pivoting member 504 comprising a serrated surface 506 to grip the loop 108.

Although the present disclosure has been illustrated by reference to specific embodiments, it will be apparent to those skilled in the art that the invention is not limited to the details of the foregoing illustrative embodiments. The invention is limited by the appended claims. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A gripping apparatus (600) configured to relocate a high-wire hook (102, 201, 204), the high-wire hook (102, 201, 204) comprising:
- a pair of opposite loops (107, 108) for wrapping there around a rope (103, 109); and
- a pair of suspension hooks (105, 106), a respective hook located in the proximity of a respective loop, for hanging the high-wire hook (102, 201, 204) on a hanging wire (200);
whereby the high-wire hook (102, 201, 204) is configured to support a high-wire crop (300) in horticulture by hanging the high-wire hook (102, 201, 204) by one of the suspension hooks (105) on the hanging wire (200); and whereby the rope (103, 109) wrapped around the loops supports an ending (301) of the high-wire crop (300); and wherein the gripping apparatus (600) comprises:
- a gripping mechanism (400, 500, 601) comprising a protuberance (404, 502); and
- a robot arm (602) operatively coupled to the gripping mechanism (400, 500, 601); and
- a processing unit (612) operatively coupled to the robot arm (602); and
wherein the processing unit (612) is configured such that it actuates the robot arm (602) to insert the protuberance (404, 502) in one of the loops, the supported loop (107), for relocating the high-wire hook (102); and wherein the gripping mechanism further comprises:
- a first support member (411) from which the protuberance (404, 502) extends; and
- a second support member (401, 503) coupled to the first support member (411, 408) configured to support the high-wire hook (102) by the loops (107, 108) when lifted; and
wherein the processing unit (612) is further configured to actuate the robot arm (602) such that it relocates the high-wire hook (102) by lifting it by the protuberance (404, 502), and such that the opposite loop (108) is hinged towards the second support member (503) with the protuberance (502) as pivoting point.

2. The gripping apparatus (600) according to claim 1, wherein the protuberance (404, 502) is slidably (403) coupled to the first support member (411); and wherein the processing unit (612) is further configured to actuate the protuberance (404, 502) for sliding it in the supported loop (107).

3. The gripping apparatus (600) according to one of the preceding claims, wherein the first support member (411) is pivotably coupled to the second support member (401); and wherein the processing unit (612) is further configured to pivot the first support member (411) for actuating the protuberance (404) in the supported loop (107).

4. The gripping apparatus (600) according to one of the preceding claims, wherein the first support member (411) further comprises a stop member (408) configured to halt the protuberance (404) when actuated.

5. The gripping apparatus (600) according to one of the preceding claims, wherein the gripping mechanism (400, 500, 601) further comprises a third support member (405) coupled to the second support member (401) configured to support the high-wire hook (102) at a loop (108) opposite to the supported loop (107) when lifted.

6. The gripping apparatus (600) according to claim 5, wherein the third support member (405) is pivotably (407) coupled to the second support member (401); and wherein the processing unit (612) is further configured to actuate the third support member (405) to clamp the loop (108) opposite to the supported loop (107.

7. The gripping apparatus (600) according to one of the claims 5 to 6, wherein the third support member (504) comprises a serrated surface (506) for supporting the high-wire hook (102) at the loop (108) opposite to the supported loop (107) when lifted.

8. The gripping apparatus (600) according to one of the preceding claims, wherein the gripping apparatus (600) further comprises:
- a detection means (608) configured to detect and spatially locate a loop (107) of a high-wire hook closest to a suspension hook (105) for hanging on the hanging wire (200); and
wherein the processing unit (612), operatively connected to the detection means (608), is further configured to:
- actuating the robot arm (602) by inserting the protuberance (404, 502) into the located loop (107); and
- gripping the high-wire hook (102); and
- lifting the high-wire hook (102) through the gripping mechanism (400, 500, 601); and
- rotating the high-wire hook (102) around the line segment bisector of a segment bounded by the suspension hooks by a predefined number of turns until one of the suspension hooks points to the hanging wire (200); and
- hanging the high-wire hook (102) on the hanging wire (200) by the suspension hook pointing to it.

9. The gripping apparatus (600) according to claim 8, wherein the detection means (608) are further configured to detect and spatially locate the hanging wire (200); and wherein the processing unit (612) is further configured to, when the high-wire hook (102) is lifted, actuating the robot arm (602) such that the high-wire hook (102) is translated by a predefined distance along the hanging wire (200).

10. The gripping apparatus (600) according to one of the claims 8 to 9, wherein the detection means (608) comprises one of the group of optical detection means, inductive detection means, and/or mechanically detection means.

11. The gripping apparatus (600) according to one of the preceding claims, further comprising movement means (610) configured to move the gripping apparatus (600) along the hanging wire.

12. The gripping apparatus (600) according to one of the preceding claims, further comprising lifting means (605) configured to lift the robot arm (602) in an upwards direction.

13. A method for relocating a high-wire hook (102) with the gripping mechanism (600) according to one of the preceding claims, the method comprising the steps of:
- actuating the robot arm (602) by inserting the protuberance (404, 502) into the supported loop (107); and
- gripping the high-wire hook (102); and
- lifting the high-wire hook (102) through the gripping mechanism (400, 500, 601); and
- rotating the high-wire hook (102) around the line segment bisector of a segment bounded by the suspension hooks by a predefined number of turns until one of the suspension hooks points to the hanging wire (200); and
- hanging the high-wire hook (102) on the hanging wire (200) by the suspension hook pointing to it.

14. The method according to claim 13, further comprising the step of actuating the robot arm (602) such that the high-wire hook (102) is translated by a predefined distance along the hanging wire (200).

## Patentansprüche

1. Greifvorrichtung (600), die zum Umsetzen eines Hochdrahthakens (102, 201, 204) konfiguriert ist, wobei der Hochdrahthaken (102, 201, 204) umfasst:
- ein Paar gegenüberliegende Schlaufen (107, 108) zum Umwickeln mit einem Seil (103, 109); und
- ein Paar Aufhängehaken (105, 106), wobei sich ein jeweiliger Haken in der Nähe einer jeweiligen Schlaufe befindet, zum Aufhängen des Hochdrahthakens (102, 201, 204) an einem Aufhängedraht (200);
wobei der Hochdrahthaken (102, 201, 204) dazu konfiguriert ist, eine Hochdrahtkultur (300) im Gartenbau zu tragen, indem der Hochdrahthaken (102, 201, 204) durch einen der Aufhängehaken (105) an dem Aufhängedraht (200) aufgehängt wird; und wobei das Seil (103, 109), das um die Schlaufen gewickelt ist, ein Ende (301) der Hochdrahtkultur (300) trägt; und wobei die Greifvorrichtung (600) umfasst:
- einen Greifmechanismus (400, 500, 601), der einen Vorsprung (404, 502) umfasst; und
- einen Roboterarm (602), der mit dem Greifmechanismus (400, 500, 601) wirkverbunden ist; und
- eine Verarbeitungseinheit (612), die mit dem Roboterarm (602) wirkverbunden ist; und
wobei die Verarbeitungseinheit (612) dazu konfiguriert ist, den Roboterarm (602) zu betätigen, um den Vorsprung (404, 502) in eine der Schlaufen, die getragene Schlaufe (107), einzusetzen, um den Hochdrahthaken (102) umzusetzen; und wobei der Greifmechanismus ferner umfasst:
- ein erstes Tragelement (411), von dem sich der Vorsprung (404, 502) aus erstreckt; und
- ein zweites Tragelement (401, 503), das mit dem ersten Tragelement (411, 408) gekoppelt ist und dazu konfiguriert ist, den Hochdrahthaken (102) durch die Schlaufen (107, 108) zu tragen, wenn er angehoben wird; und
wobei die Verarbeitungseinheit (612) ferner dazu konfiguriert ist, den Roboterarm (602) so zu betätigen, dass er den Hochdrahthaken (102) umsetzt, indem er ihn durch den Vorsprung (404, 502) anhebt, und derart, dass die gegenüberliegende Schlaufe (108) zum zweiten Tragelement (503) hin mit dem Vorsprung (502) als Schwenkpunkt eingehängt ist.

2. Greifvorrichtung (600) nach Anspruch 1, wobei der Vorsprung (404, 502) verschiebbar (403) mit dem ersten Tragelement (411) gekoppelt ist; und wobei die Verarbeitungseinheit (612) ferner dazu konfiguriert ist, den Vorsprung (404, 502) zu betätigen, um ihn in der getragenen Schlaufe (107) zu verschieben.

3. Greifvorrichtung (600) nach einem der vorhergehenden Ansprüche, wobei das erste Tragelement (411) schwenkbar mit dem zweiten Tragelement (401) gekoppelt ist; und wobei die Verarbeitungseinheit (612) ferner dazu konfiguriert ist, das erste Tragelement (411) zum Betätigen des Vorsprungs (404) in der getragenen Schlaufe (107) zu schwenken.

4. Greifvorrichtung (600) nach einem der vorhergehenden Ansprüche, wobei das erste Tragelement (411) ferner ein Stoppelement (408) umfasst, das dazu konfiguriert ist, den Vorsprung (404) anzuhalten, wenn es betätigt wird.

5. Greifvorrichtung (600) nach einem der vorhergehenden Ansprüche, wobei der Greifmechanismus (400, 500, 601) ferner ein drittes Tragelement (405) umfasst, das mit dem zweiten Tragelement (401) gekoppelt ist und dazu konfiguriert ist, den Hochdrahthaken (102) an einer Schlaufe (108) gegenüber der getragenen Schlaufe (107) zu tragen, wenn er angehoben wird.

6. Greifvorrichtung (600) nach Anspruch 5, wobei das dritte Tragelement (405) schwenkbar (407) mit dem zweiten Tragelement (401) gekoppelt ist; und wobei die Verarbeitungseinheit (612) ferner dazu konfiguriert ist, das dritte Tragelement (405) zu betätigen, um die Schlaufe (108) gegenüber der getragenen Schlaufe (107) festzuklemmen.

7. Greifvorrichtung (600) nach einem der Ansprüche 5 bis 6, wobei das dritte Tragelement (504) eine gezahnte Oberfläche (506) zum Tragen des Hochdrahthakens (102) an der Schlaufe (108) gegenüber der getragenen Schlaufe (107) umfasst, wenn er angehoben wird.

8. Greifvorrichtung (600) nach einem der vorhergehenden Ansprüche, wobei die Greifvorrichtung (600) ferner umfasst:
- ein Erkennungsmittel (608), das dazu konfiguriert ist, eine Schlaufe (107) eines Hochdrahthakens, der einem Aufhängehaken (105) am nächsten liegt, zum Aufhängen an dem Aufhängedraht (200) zu erkennen und räumlich zu lokalisieren; und
wobei die Verarbeitungseinheit (612), die mit dem Erkennungsmittel (608) wirkverbunden ist, ferner konfiguriert ist zum:
- Betätigen des Roboterarms (602) durch Einsetzen des Vorsprungs (404, 502) in die lokalisierte Schlaufe (107); und
- Greifen des Hochdrahthakens (102); und
- Anheben des Hochdrahthakens (102) durch den Greifmechanismus (400, 500, 601); und
- Drehen des Hochdrahthakens (102) um die Streckenhalbierende einer Strecke, die durch die Aufhängehaken begrenzt ist, um eine vordefinierte Anzahl von Drehungen, bis einer der Aufhängehaken auf den Aufhängedraht (200) zeigt; und
- Aufhängen des Hochdrahthakens (102) an dem Aufhängedraht (200) durch den Aufhängehaken, der darauf zeigt.

9. Greifvorrichtung (600) nach Anspruch 8, wobei die Erkennungsmittel (608) ferner dazu konfiguriert sind, den Aufhängedraht (200) zu erkennen und räumlich zu lokalisieren; und wobei die Verarbeitungseinheit (612) ferner dazu konfiguriert ist, wenn der Hochdrahthaken (102) angehoben wird, den Roboterarm (602) so zu betätigen, dass der Hochdrahthaken (102) um eine vordefinierte Distanz entlang des Aufhängedrahts (200) verschoben wird.

10. Greifvorrichtung (600) nach einem der Ansprüche 8 bis 9, wobei das Erkennungsmittel (608) eines aus der Gruppe von optischen Erkennungsmitteln, induktiven Erkennungsmitteln und/oder mechanischen Erkennungsmitteln umfasst.

11. Greifvorrichtung (600) nach einem der vorhergehenden Ansprüche, ferner umfassend ein Bewegungsmittel (610), das dazu konfiguriert ist, die Greifvorrichtung (600) entlang des Aufhängedrahts zu bewegen.

12. Greifvorrichtung (600) nach einem der vorhergehenden Ansprüche, ferner umfassend ein Hebemittel (605), das dazu konfiguriert ist, den Roboterarm (602) in einer Aufwärtsrichtung anzuheben.

13. Verfahren zum Umsetzen eines Hochdrahthakens (102) mit dem Greifmechanismus (600) nach einem der vorhergehenden Ansprüche, wobei das Verfahren die folgenden Schritte umfasst:
- Betätigen des Roboterarms (602) durch Einsetzen des Vorsprungs (404, 502) in die getragene Schlaufe (107); und
- Greifen des Hochdrahthakens (102); und
- Anheben des Hochdrahthakens (102) durch den Greifmechanismus (400, 500, 601); und
- Drehen des Hochdrahthakens (102) um die Streckenhalbierende einer Strecke, die durch die Aufhängehaken begrenzt ist, um eine vordefinierte Anzahl von Drehungen, bis einer der Aufhängehaken auf den Aufhängedraht (200) zeigt; und
- Aufhängen des Hochdrahthakens (102) an dem Aufhängedraht (200) durch den Aufhängehaken, der darauf zeigt.

14. Verfahren nach Anspruch 13, ferner umfassend den Schritt eines Betätigens des Roboterarms (602) derart, dass der Hochdrahthaken (102) um eine vordefinierte Distanz entlang des Aufhängedrahts (200) verschoben wird.

## Revendications

1. Appareil de préhension (600) conçu pour repositionner un crochet de fil haut (102, 201, 204), le crochet de fil haut (102, 201, 204) comprenant :
- une paire de boucles opposées (107, 108) destinées à enrouler autour d'elles une corde (103, 109) ; et
- une paire de crochets de suspension (105, 106), un crochet respectif positionné à proximité d'une boucle respective, destiné à accrocher le crochet de fil haut (102, 201, 204) sur un fil d'accrochage (200) ;
grâce à quoi ledit crochet de fil haut (102, 201, 204) est conçu pour supporter une culture sur fil haut (300) en horticulture en accrochant le crochet de fil haut (102, 201, 204) par l'un des crochets de suspension (105) sur le fil d'accrochage (200) ; et grâce à quoi la corde (103, 109) enroulée autour des boucles supporte une extrémité (301) de la culture sur fil haut (300) ; et ledit appareil de préhension (600) comprenant :
- un mécanisme de préhension (400, 500, 601) comprenant une protubérance (404, 502) ; et
- un bras de robot (602) couplé fonctionnellement au mécanisme de préhension (400, 500, 601) ; et
- une unité de traitement (612) couplée fonctionnellement au bras de robot (602) ; et
ladite unité de traitement (612) étant conçue de sorte qu'elle actionne le bras de robot (602) pour insérer la protubérance (404, 502) dans l'une des boucles, la boucle supportée (107), en vue du repositionnement du crochet de fil haut (102) ; et ledit mécanisme de préhension comprenant en outre :
- un premier élément de support (411) à partir duquel s'étend la protubérance (404, 502) ; et
- un deuxième élément de support (401, 503) couplé au premier élément de support (411, 408) conçu pour supporter le crochet de fil haut (102) au moyen des boucles (107, 108) lorsqu'il est levé ; et
ladite unité de traitement (612) étant en outre conçue pour actionner le bras de robot (602) de sorte qu'il repositionne le crochet de fil haut (102) en le levant par la protubérance (404, 502), et de sorte que la boucle opposée (108) soit articulée vers le deuxième élément de support (503) avec la protubérance (502) en tant que point de pivotement.

2. Appareil de préhension (600) selon la revendication 1, ladite protubérance (404, 502) étant couplée de manière coulissante (403) au premier élément de support (411) ; et ladite unité de traitement (612) étant en outre conçue pour actionner la protubérance (404, 502) pour la faire coulisser dans la boucle supportée (107).

3. Appareil de préhension (600) selon l'une des revendications précédentes, ledit premier élément de support (411) étant couplé de manière pivotante au deuxième élément de support (401) ; et ladite unité de traitement (612) étant en outre conçue pour faire pivoter le premier élément de support (411) pour actionner la protubérance (404) dans la boucle supportée (107).

4. Appareil de préhension (600) selon l'une des revendications précédentes, ledit premier élément de support (411) comprenant en outre un élément d'arrêt (408) conçu pour arrêter la protubérance (404) lorsqu'elle est actionnée.

5. Appareil de préhension (600) selon l'une des revendications précédentes, ledit mécanisme de préhension (400, 500, 601) comprenant en outre un troisième élément de support (405) couplé au deuxième élément de support (401) conçu pour supporter le crochet de fil haut (102) au niveau d'une boucle (108) opposée à la boucle supportée (107) lorsqu'il est soulevé.

6. Appareil de préhension (600) selon la revendication 5, ledit troisième élément de support (405) étant couplé de manière pivotante (407) au deuxième élément de support (401) ; et ladite unité de traitement (612) étant en outre conçue pour actionner le troisième élément de support (405) pour serrer la boucle (108) opposée à la boucle supportée (107.

7. Appareil de préhension (600) selon l'une des revendications 5 à 6, ledit troisième élément de support (504) comprenant une surface dentelée (506) pour supporter le crochet de fil haut (102) au niveau de la boucle (108) opposée à la boucle supportée (107) lorsqu'il est levé.

8. Appareil de préhension (600) selon l'une des revendications précédentes, ledit appareil de préhension (600) comprenant en outre :
- des moyens de détection (608) conçus pour détecter et positionner spatialement une boucle (107) d'un crochet de fil haut la plus proche d'un crochet de suspension (105) en vue de l'accrochage au fil d'accrochage (200) ; et
ladite unité de traitement (612), connectée fonctionnellement aux moyens de détection (608), étant en outre conçue pour :
- l'actionnement du bras du robot (602) en insérant la protubérance (404, 502) dans la boucle positionnée (107) ; et
- la préhension du crochet de fil haut (102) ; et
- le levage du crochet de fil haut (102) par l'intermédiaire du mécanisme de préhension (400, 500, 601) ; et
- la rotation du crochet de fil haut (102) autour de la bissectrice de segment de ligne d'un segment délimité par les crochets de suspension par un nombre de tours prédéfini jusqu'à ce que l'un des crochets de suspension pointe vers le fil d'accrochage (200) ; et
- l'accrochage du crochet de fil haut (102) au fil d'accrochage (200) par le crochet de suspension pointant vers lui.

9. Appareil de préhension (600) selon la revendication 8, lesdits moyens de détection (608) étant en outre conçus pour détecter et positionner spatialement le fil d'accrochage (200) ; et ladite unité de traitement (612) étant en outre conçue pour, lorsque le crochet de fil haut (102) est levé, actionner le bras de robot (602) de sorte que le crochet de fil haut (102) soit translaté d'une distance prédéfinie le long du fil d'accrochage (200).

10. Appareil de préhension (600) selon l'une des revendications 8 à 9, lesdits moyens de détection (608) comprenant l'un du groupe de moyens de détection optiques, de moyens de détection inductifs et/ou de moyens de détection mécaniques.

11. Appareil de préhension (600) selon l'une des revendications précédentes, comprenant en outre des moyens de déplacement (610) conçus pour déplacer l'appareil de préhension (600) le long du fil d'accrochage.

12. Appareil de préhension (600) selon l'une des revendications précédentes, comprenant en outre des moyens de levage (605) conçus pour lever le bras de robot (602) dans une direction vers le haut.

13. Procédé permettant le repositionnement d'un crochet de fil haut (102) avec le mécanisme de préhension (600) selon l'une des revendications précédentes, le procédé comprenant les étapes de :
- actionnement du bras du robot (602) en insérant la protubérance (404, 502) dans la boucle supportée (107) ; et
- préhension du crochet de fil haut (102) ; et
- levage du crochet de fil haut (102) par l'intermédiaire du mécanisme de préhension (400, 500, 601) ; et
- rotation du crochet de fil haut (102) autour de la bissectrice de segment de ligne d'un segment délimité par les crochets de suspension par un nombre de tours prédéfini jusqu'à ce que l'un des crochets de suspension pointe vers le fil d'accrochage (200) ; et
- accrochage du crochet de fil haut (102) au fil d'accrochage (200) par le crochet de suspension pointant vers lui.

14. Procédé selon la revendication 13, comprenant en outre l'étape d'actionnement du bras de robot (602) de sorte que le crochet de fil haut (102) soit translaté d'une distance prédéfinie le long du fil d'accrochage (200).
